# EUROPÄISCHE PATENTANMELDUNG

(11) **EP 2 383 458 A2**
(43) Veröffentlichungstag der Anmeldung: **02.11.2011**
(21) Anmeldenummer: 11164043.9
(22) Anmeldetag: 28.04.2011
(51) Int. Cl.: F02M 21/02, F16K 31/06

(54) **Magnetventil einer Vorrichtung zur Zuteilung von Brenngas an eine Brennkraftmaschine**

(30) Priorität: 28.04.2010 DE 202010006187 U
(71) Anmelder: Hase, Anke, 22880 Wedel (DE)
(72) Erfinder: Die Erfindernennung liegt noch nicht vor
(74) Vertreter: Richter, Joachim

(57) **Zusammenfassung**

Die vorliegende Erfindung betrifft ein Magnetventil (100) und eine Vorrichtung zur Zuteilung von Brenngas an eine Brennkraftmaschine, aufweisend einen Ventilkörper (10), eine Ventilplatte (11), die kippbar im Ventilkörper (10) aufgenommen ist, einen Ventilsitz (12), gegen den die Ventilplatte (11) dichtend zur Anlage bringbar ist, eine Magnetspule (13) mit einem Magnetkern (14) und einem Joch (30), wobei durch elektrisches Bestromen der Magnetspule (13) die Ventilplatte (11) mit einer Ventilplattenprallfläche (15) gegen eine Magnetkernprallfläche (16) des Magnetkerns (14) kippbar ist, sodass durch Kippen der Ventilplatte (11) entgegen den Magnetkern (14) die dichtende Anlage der Ventilplatte (11) vom Ventilsitz (12) lösbar ist, dadurch gekennzeichnet, dass wenigstens eine der Prallflächen (15, 16) eine Schutzbeschichtung (17) aufweist.

## Beschreibung

Die vorliegende Erfindung schlägt ein Magnetventil einer Vorrichtung zur Zuteilung von Brenngas an eine Brennkraftmaschine gemäß dem Oberbegriff des Anspruches 1 vor, wobei das Magnetventil wenigstens aufweist: Einen Ventilkörper, eine Ventilplatte, die kippbar im Ventilkörper aufgenommen ist und einen Ventilsitz, gegen den die Ventilplatte dichtend zur Anlage bringbar ist. Ferner weist das Magnetventil eine Magnetspule mit einem Magnetkern und ein Joch auf, wobei durch elektrisches Bestromen der Magnetspule die Ventilplatte gegen eine Feder mit einer Ventilplattenprallfläche gegen eine Magnetkernprallfläche des Magnetkerns kippbar ist, so dass durch Kippen der Ventilplatte entgegen den Magnetkern die dichtende Anlage der Ventilplatte vom Ventilsitz lösbar ist.

### STAND DER TECHNIK

Die WO 2004/013483 A2 offenbart ein Magnetventil einer Vorrichtung zur Zuteilung von Brenngas an eine Brennkraftmaschine mit einem Ventilkörper, in dem eine Ventilplatte aufgenommen ist. Das Magnetventil kann in mehrfacher Anordnung Bestandteil der Vorrichtung zur Zuteilung von Brenngas an eine Brennkraftmaschine sein, wobei derartige Vorrichtungen insbesondere für die Ausrüstung von Nutzfahrzeugen insbesondere zum Umrüsten von mit Flüssigkraftstoff betriebenen Brennkraftmaschinen zu gasbetriebenen Brennkraftmaschinen dienen und nachträglich beispielsweise in derartige oder auch sonstige Kraftfahrzeuge eingebaut werden können. Jedem Zylinder der Brennkraftmaschine kann ein Magnetventil zugeordnet werden, das über eine Auslassleitung mit der Luftansaugleitung des Zylinders verbunden wird.

Die hierin offenbarte Ventilplatte besitzt einen zentralen Teil, einen elastisch verformbaren Zwischenabschnitt und einen umlaufenden Rand. Durch elastische Verformung des Zwischenabschnittes kann der zentrale Teil gegen einen Ventilsitz bewegt werden, wenn das Magnetventil schließt, und der zentrale Teil kann vom Ventilsitz abgehoben werden, wenn das Magnetventil öffnet. Ist der zentrale Teil der Ventilplatte vom Ventilsitz abgehoben, so ist ein zylinderförmiger Strömungsquerschnitt für das Brenngas freigegeben, um von einer Einlassleitung in eine Auslassleitung zu gelangen.

Die Bewegung des zentralen Teils erfolgt durch eine Magnetspule und einen in der Magnetspule angeordneten Magnetkern, wobei die Magnetspule durch Bestromung die Ventilplatte vom Ventilsitz abhebt. Wird die Bestromung der Magnetspule beendet, so soll die Ventilplatte durch Strömungskräfte des Brenngases wieder in die Schließstellung gelangen.

Dabei kann das Problem entstehen, dass der Magnetkern aufgrund von magnetischer Remanenz nach Beendigung der Bestromung der Magnetspule eine Magnetisierung aufweist, die so groß ist, um die Ventilplatte in an den Magnetkern angezogener Position zu halten, und sodass die Strömungskräfte des Brenngases nicht ausreichen, um den zentralen Teil der Ventilplatte vom Magnetkern wieder zu lösen. Als Folge verbleibt das Magnetventil in der Öffnungsposition. Insbesondere Verunreinigungen im Brenngas, die sich bei längerem Betrieb des Magnetventils auf den Kontaktflächen zwischen der Ventilplatte und dem Ventilsitz oder zwischen der Ventilplatte und dem Magnetkern absetzen, können zu Kohäsionseffekten führen, und es ist nicht sicherzustellen, dass die Ventilplatte bei Bestromung oder im stromlosen Zustand der Magnetspule die gewünschte Öffnungs- bzw. Schließposition einnimmt. Dieser nachteilige Effekt wird insbesondere dadurch begünstigt, dass der zylinderförmige Strömungsquerschnitt zwischen der Ventilplatte und dem Ventilsitz einen großen Durchmesser aufweist, sodass folglich auch eine große Kontaktfläche bzw. Dichtfläche entsteht, wodurch der vorstehend beschriebene nachteilige Effekt weiter verstärkt wird.

Die EP 1 193 387 A1 offenbart ein weiteres Magnetventil, welches für eine Vorrichtung zur Zuteilung von Brenngas an eine Brennkraftmaschine bestimmt ist. Das Magnetventil ist mit einem Ventilkörper ausgeführt, in dem eine rechteckige Ventilplatte aufgenommen ist. Die Ventilplatte kann durch Bestromen einer Magnetspule vom Ventilsitz abgehoben werden, und es entstehen Strömungskanäle durch eine Mittelöffnung in der Ventilplatte und durch Seitenräume, durch die das Brenngas zwischen einer Einlassleitung und einer Auslassleitung hindurchströmen kann. Auch dieser Ausführung haftet der Nachteil an, dass neben magnetischer Remanenz im Magnetkern der Magnetspule oder auch in der Ventilplatte selbst ein Anhaften der Ventilplatte am Magnetkern oder am Ventilsitz durch Verunreinigungen der Kontaktflächen an der Ventilplatte entsteht.

Aus der DE 602 02 323 T2 ist ein weiteres gattungsbildendes Magnetventil bereits bekannt. Das Magnetventil teilt dabei der Ansaugleitung des Zylinders Brenngas zu, wobei das Magnetventil für einen Arbeitstakt des Zylinders der Brennkraftmaschine bauartbedingt insbesondere mehrere Schaltvorgänge ausführen kann. Mit jedem Schaltvorgang wird eine Menge Brenngas an die Ansaugleitung bzw. an den Zylinder der Brennkraftmaschine zugeteilt, wobei bei einem derartigen Magnetventil mit einer kippbar aufgenommenen Ventilplatte Schaltfrequenzen bis zu 500 Hz auftreten können.

Mit jedem Schaltvorgang des Magnetventils wird die Ventilplatte durch elektrisches Bestromen der Magnetspule an den Magnetkern angezogen. Dabei wird die Ventilplatte gegen eine Feder aus der dichtenden Anlage vom Ventilsitz abgehoben. Folglich wird eine fluidische Verbindung freigegeben, die eine Einlassleitung des Magnetventils zur Zufuhr des Brenngases mit der Auslassleitung des Magnetventils zur Zuteilung des Brenngases an die Brennkraftmaschine freigibt. Hält die Bestromung der Magnetspule an, ist die Einlassleitung mit der Auslassleitung des Magnetventils fluidisch verbunden und Brenngas kann an die Brennkraftmaschine zugeteilt werden. Wird die Bestromung der Magnetspule beendet, so bewirkt auch hier eine Druckdifferenz des Brenngases zwischen der Einlassleitung und der Auslassleitung oder eine Feder die erneute Anlage der Ventilplatte gegen den Ventilsitz.

Für die Kippbewegung der Ventilplatte ist diese in einer Kippachse kippbeweglich im Ventilkörper aufgenommen, wobei die Kippachse durch eine Klemmung eines Endes der Ventilplatte zwischen einem elastischen Bauteil und ebenen Oberfläche eines starren Bauteils gebildet ist. Nachteilhafterweise kann der Magnetkern auch gemäß der hier gezeigten Ausführungsform aufgrund von magnetischer Remanenz nach Beendigung der Bestromung der Magnetspule eine Magnetisierung (Remanenz) aufweisen, die hinreichend groß ist, um die Ventilplatte in an den Magnetkern angezogener Position zu halten. Weiterhin ist von Nachteil, dass das in Form einer Walze ausgeführte elastische Bauteil eine temperaturbedingte Änderung der Elastizität erfahren kann, sodass sich das Kippverhalten der Ventilplatte und damit das eingestellte Schaltverhalten der Ventilplatte ändern kann.

Um dem Effekt der angezogenen Ventilplatte gegen den Magnetkern auch bei beendeter Bestromung der Magnetspule entgegenzuwirken, kann vorgesehen sein, in den Magnetkern einen Messingstift einzubringen, der einen Mindestabstand zwischen der Ventilplattenprallfläche und der Magnetkernprallfläche bewirkt, auch wenn die Ventilplatte gegen den Magnetkern angezogen ist.

Aufgrund der hohen Dynamik in der Kippbewegung der Ventilplatte und der hohen Schaltfrequenz bis zu 500 Hz kann jedoch der Nachteil entstehen, dass der Messingstift durch die schlagende Bewegung der Ventilplatte gegen das freie Ende des Messingstiftes über eine längere Gebrauchsdauer des Magnetventils eine Deformation oder Abnutzung erfährt. Der Teil des Messingstiftes, der aus der Magnetkernprallfläche hervorsteht, um den Abstand zwischen der Ventilplattenprallfläche und der Magnetkernprallfläche aufrecht zu erhalten, kann unzulässig verkürzt werden oder sogar verschwinden. Folglich kann bei längerem Gebrauch des Magnetventils eine Funktionsstörung auftreten, wenn die Ventilplatte aufgrund von Remanenzeffekten im Magnetkern an diesem haften bleibt oder das Abfallen der Ventilplatte verzögert und eine Offenstellung des Magnetventils bleibt auch bei beendeter Bestromung der Magnetspule erhalten.

Es ist daher die Aufgabe der vorliegenden Erfindung, ein Magnetventil einer Vorrichtung zur Zuteilung von Brenngas an eine Brennkraftmaschine zu schaffen, das die vorbezeichneten Nachteile des Standes der Technik überwindet und über eine lange Gebrauchsdauer eine sichere Funktion aufweist.

Diese Aufgabe wird ausgehend von einem Magnetventil einer Vorrichtung zur Zuteilung von Brenngas an eine Brennkraftmaschine gemäß dem Oberbegriff des Anspruches 1 in Verbindung mit dessen kennzeichnenden Merkmalen gelöst. Zweckmäßige Weiterbildungen der Erfindung sind in den abhängigen Ansprüchen angegeben.

### OFFENBARUNG DER ERFINDUNG

Die Erfindung schließt die technische Lehre ein, dass wenigstens eine der Prallflächen eine Schutzbeschichtung aufweist.

Die Erfindung geht dabei von dem Gedanken aus, einen Messingstift in endseitiger Anordnung am Magnetkern zu ersetzen, indem eine amagnetische (nichtmagnetische) Schutzbeschichtung auf wenigstens einer der Prallflächen, nämlich der Ventilplattenprallfläche und/oder der Magnetkernprallfläche, vorgesehen wird. Die Schutzbeschichtung bewirkt dabei sowohl einen Verschleißschutz zum Schutz wenigstens einer der Prallflächen als auch einen Mindestabstand zwischen der Ventilplatte und dem Magnetkern, wenn die Magnetspule bestromt ist. Folglich können der Schutzbeschichtung diese beiden genannten Funktionen zugeordnet werden. Damit kann auf einfache Weise erreicht werden, dass die Ventilplatte nicht aufgrund von Remanenzeffekten am Magnetkern haften bleibt oder verzögert wird, wenn die Bestromung der Magnetspule bereits beendet ist. Desweiteren kann die Schutzbeschichtung bewirken, dass auch bei einem längeren Gebrauch des Magnetventils keine Deformation von beteiligten Komponenten hervorgerufen wird.

Mit Vorteil kann die Schutzbeschichtung als Verschleißschutzbeschichtung mit nicht- ferromagnetischen Eigenschaften ausgebildet sein. Verschleißschutzbeschichtungen zeichnen sich durch eine besonders hohe Härte aus, wobei beide Prallflächen eine Verschleißschutzbeschichtung aufweisen können, jedoch mit Vorteil die Verschleißschutzbeschichtung lediglich auf einer der am Kontakt zwischen der Ventilplatte und dem Magnetkern beteiligten Prallflächen vorgesehen ist. Damit wird eine vorteilhafte Materialpaarung erreicht, nämlich aus einer harten Verschleißschutzbeschichtung und einem weicheren Werkstoff des Magnetkerns, wodurch tribologische Vorteile entstehen. Mit besonderem Vorteil kann somit lediglich die Ventilplattenprallfläche mit der Verschleißschutzbeschichtung behaftet sein. Selbstverständlich ist die Verschleißschutzbeschichtung mit nicht-ferromagnetischen Eigenschaften ausgebildet, um den Remanenzeffekten entgegenzuwirken, und um zu vermeiden, dass die Ventilplatte am Magnetkern haften bleibt, wenn die Bestromung der Magnetspule bereits beendet ist.

Vorteilhafterweise ist die Schutzbeschichtung eine Metallbeschichtung und vorzugsweise eine Molybdänbeschichtung, eine Titanbeschichtung und/oder eine Keramikbeschichtung. Molybdänbeschichtungen zeichnen sich durch eine große Härte und Zähigkeit aus und besitzen zugleich gute Verschleißschutzeigenschaften. Die Verwendung von Molybdänbeschichtungen ist aus dem Motorenbau bekannt und dient vornehmlich der Verbesserung des Verschleißschutzes. Bekannte Schutzschichten, die auf einer Dünnschichttechnik (z.B. PLD- oder CVD-Verfahren) beruhen oder Schutzschichten, die auf der Änderung der Stoffeigenschaften des Werkstückwerkstoffes beruhen, beispielsweise durch ein Oberflächenhärten, können vorliegend nicht Verwendung finden, da der notwendige Effekt der geometrischen Trennung der Ventilplatte vom Magnetkern durch derartige sehr dünne Schutzschichten nicht erreicht wird.

Molybdänbeschichtungen oder Keramikbeschichtungen können auf der angewendeten Oberfläche eine Dicke aufweisen, die die erforderliche geometrische Trennung der gegeneinander wirkenden Prallflächen aufrecht erhält, um die beschriebenen Remanenzeffekte zu überwinden.

Mit Vorteil kann die Schutzbeschichtung mit einem Materialauftragverfahren, insbesondere mit einem Spritzverfahren und bevorzugt mit einem Flammspritzverfahren aufgebracht werden. Dabei kann beispielsweise ein Drahtflammspritzen, ein Pulverflammspritzen, ein Lichtbogenflammspritzen, ein Hochgeschwindigkeitsflammspritzen, ein Kaltgasspritzen oder ein Plasmaspritzen Verwendung finden. Die Spritzverfahren basieren auf dem Prinzip, das Auftragsmaterial, vorliegend beispielsweise Molybdän, einer Flamme zuzugeben, die unter Zuhilfenahme eines Zerstäubergases wie Druckluft oder Stickstoff das Material aufschmilzt und in Richtung zur beschichtenden Oberfläche schleudert. Das Molybdänmaterial kann beispielsweise in Form eines Drahtes oder eines Pulvers bereitgestellt werden. Im Rahmen der vorliegenden Erfindung kann das Material der Schutzbeschichtung auch als vorgefertigtes Element bereitgestellt werden und auf wenigstens einer der Prallflächen appliziert werden.

Mit weiterem Vorteil kann die Schutzbeschichtung eine Schichthärte von wenigstens 500 HV10, bevorzugt von wenigstens ca. 800 HV10 und besonders bevorzugt von wenigstens ca. 1000 HV10 aufweisen. Die angegebenen Vickers-Härten sind erreichbare Werte, die Molybdänbeschichtungen aufweisen können. Gepaart mit einer entsprechenden Dicke der Molybdänbeschichtung und einer Härte von bis zu 1000 HV10 wird erreicht, dass auch bei einer langen Gebrauchsdauer des Magnetventils keine oder nur minimale Verschleißspuren an den Prallflächen auftreten.

Nach einer bevorzugten Ausführungsform kann die Schutzbeschichtung eine Schichtdicke aufweisen, die wenigstens derart bestimmt ist, dass ein Lösen der Ventilplatte insbesondere bei magnetischer Remanenz des Magnetkerns ermöglicht ist. Bei direktem Körperkontakt ferromagnetischer Materialien kann bei magnetischer Remanenz der Hafteffekt auftreten, und die beiden Körper können nur bei Überwindung einer Mindeststabzugkraft wieder voneinander getrennt werden. Wird jedoch bereits ein geringer Abstand zwischen den beiden Körperoberflächen aufrechterhalten, so kann der Hafteffekt fast vollständig überwunden werden. Die Aufrechterhaltung des Mindestabstandes kann erfindungsgemäß bereits über die Schichtdicke der Schutzbeschichtung erreicht werden, die beispielsweise eine Dicke von 0,1 mm, bevorzugt von 0,5 mm, bevorzugt von 1 mm bis 0,2 mm Stärke vorgesehen ist.

Die Ventilplattenprallfläche ist durch eine Planfläche der Ventilplatte gebildet, wobei sich die Schutzbeschichtung über der gesamten Planfläche erstrecken kann. Aus fertigungstechnischen Gründen kann eine vollflächig aufgebrachte Schutzbeschichtung von Vorteil sein, insbesondere bei Verwendung eines Spritzverfahrens. Da die Ventilplatte in einer Kippachse kippbar im Ventilkörper aufgenommen ist, können die an der Kippachse beteiligten Oberflächen ebenfalls Schutzbeschichtungen aufweisen, so dass auch einem möglichen Verschleiß in der Kippachse entgegengewirkt werden kann. Mit noch weiterem Vorteil kann die Ventilplatte über der vollständigen Oberfläche eine Schutzbeschichtung aufweisen, da die Planfläche, die der Planfläche gegenüber steht, die zum Magnetkern weist, an der dichtenden Anordnung gegen den Ventilsitz beteiligt ist. Insbesondere kann auf der Planfläche, die in Richtung zum Ventilsitz weist, ein Verschlusselement aus elastischem Werkstoff angeformt oder aufgebracht sein.

Nach einer weiteren Ausführungsform kann sich die Schutzbeschichtung nur über den Teil der Planfläche erstrecken, der wenigstens die Kontaktfläche der Ventilplatte zur Magnetkernprallfläche bildet. Damit kann die Schutzbeschichtung lediglich in dem Bereich auf der Ventilplattenprallfläche angewendet werden, der die Kontaktfläche zur Magnetkernprallfläche bildet. Gleichermaßen kann die Schutzbeschichtung lediglich auf dem Bereich der Magnetkernprallfläche angewendet werden, die die Kontaktfläche zur Ventilplatte bildet.

Nach einem noch weiteren Ausführungsbeispiel kann die Schichtdicke der Schutzbeschichtung über der flächigen Erstreckung der Ventilplattenprallfläche unterschiedlich ausgebildet werden, insbesondere kann die Schichtdicke über der Kontaktfläche und bevorzugt im Zentrum der Kontaktfläche der Ventilplatte zur Magnetkernprallfläche ein Maximum aufweisen. Wird ein Flammspritzverfahren verwendet, kann die Spritzflamme beispielsweise auf das Zentrum gerichtet sein, und es entsteht eine Schichtdickenverteilung der Schutzbeschichtung, die im Zentrum ein Maximum aufweist. Die aufgeschmolzenen Partikel, beispielsweise die Molybdänpartikel, setzen sich in Folge im Zentrum der Flammenspitze auf der zu beschichtenden Oberfläche ab, so dass eine gaussähnliche Verteilung mit einem Maximum im Zentrum auftritt.

Des Weiteren können mehrere Schutzschichten in aufeinander folgenden Beschichtungsschritten aufgebracht werden, die in ihrer seitlichen Erstreckung um das Zentrum der Kontaktfläche kleiner werden. Folglich sind im Zentrum der Kontaktfläche mehr Schutzschichten übereinander auf die Oberfläche aufgetragen, als mit größerem Abstand zum Zentrum.

Als weiterhin vorteilhaft hat sich herausgestellt, wenn das Verschlusselement, das zur Auflage auf den Ventilsitz vorgesehen ist, aus einem Elastomer besteht oder eine Elastomerbeschichtung aufweist. Damit kann die Dichtwirkung des Verschlusselementes gegen den Ventilsitz verbessert werden.

Mit weiterem Vorteil kann die kippbare Aufnahme der Ventilplatte im Ventilkörper mittels einem oder mehreren Gelenkschäften und vorzugsweise mittels zwei Gelenkschäften vorgesehen sein, an dem bzw. an denen die Ventilplatte aufgehängt ist. Damit ist gegenüber einer Anordnung der Ventilplatte zwischen einem elastischen Bauteil und einer ebenen Oberfläche eines starren Bauteils eine verbesserte, nicht direkt klemmende Anordnung der Ventilplatte geschaffen, sodass eine längere Betriebsdauer erwartet werden kann, die kein temperaturabhängiges Verhalten zeigt.

Weiterhin vorteilhaft ist, wenn die Ventilplatte eine der Anzahl der Gelenkschäfte zugeordnete Anzahl von Schaftdurchgängen aufweist, durch die sich die Gelenkschäfte teilweise hindurch erstrecken, sodass zwischen den Gelenkschäften und den Schaftdurchgängen eine Gelenkanordnung gebildet ist, und wobei die Gelenkschäfte vorzugsweise aus einem nicht magnetischen Stahl ausgebildet sind. Insbesondere kann der wenigstens eine Gelenkschaft eine abgeschrägte Bestimmungsfläche aufweisen, durch die eine Kippfreiheit der Ventilplatte zwischen einer am Ventilsitz und einer am Magnetkern angrenzenden Position bestimmt ist.

Als weiteres Ausführungsbeispiel zur Erreichung eines Luftspaltes zwischen dem Magnetkern der Spule und der Ventilplatte könnte eine Buchse dienen, die auf den aus der Magnetspule herausragenden Kern befestigt ist und den Magnetkern um 01,-0,2 mm überragt.

Sowohl aus Montagegründen als auch aus Wartungsgründen können der Ventilkörper vorzugsweise mit vormontierter Ventilplatte und das Gehäuseoberteil vorzugsweise mit integrierter Magnetspule, mit integriertem Magnetkern und insbesondere mit einem angeformten Elektroanschlussgehäuse eine jeweilige bauliche Einheit bilden, die dichtend aufeinander montierbar sind. Im Rahmen von Servicearbeiten können zum Beispiel die Ventilplatte und insbesondere das Verschlusselement oder auch die Gelenkschäfte ausgetauscht werden, sodass ein einfaches Lösen der Gehäusehälften einen Zugang zum Innenraum ermöglicht. Bei einem Defekt der Magnetspule kann weiterhin auf einfache Weise das Gehäuseoberteil vom Ventilkörper gelöst und ausgetauscht werden, indem die Magnetspule und der Magnetkern eingegossen sein können.

Vorteilhafterweise weist der Ventilkörper mehrere Einlassleitungen auf, wobei die Magnetventile mehrfach zueinander benachbart anordbar sind und durch die Einlassleitungen ein gemeinsamer sich durch die mehreren Magnetventile hindurch erstreckender Brenngas- Speisekanal bildbar ist.

Die Aufgabe der vorliegenden Erfindung wird ferner gelöst durch eine Vorrichtung zur Zuteilung von Brenngas an eine Brennkraftmaschine mit wenigstens einem Magnetventil, wobei das Magnetventil aufweist: Einen Ventilkörper, eine Ventilplatte, die kippbar im Ventilkörper aufgenommen ist, einen Ventilsitz, gegen den die Ventilplatte dichtend zur Anlage bringbar ist, eine Magnetspule mit einem Magnetkern und einem Joch, wobei durch elektrisches Bestromen der Magnetspule die Ventilplatte mit einer Ventilplattenprallfläche gegen eine Magnetkernprallfläche kippbar ist, so dass durch Kippen der Ventilplatte entgegen den Magnetkern die dichtende Anlage der Ventilplatte vom Ventilsitz lösbar ist, wobei wenigstens eine der Prallflächen eine Schutzbeschichtung aufweist.

### KURZE BESCHREIBUNG DER ZEICHNUNGEN

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt in rein schematischer Darstellung:
Fig. 1 ein Ausführungsbeispiel eines Magnetventils einer Vorrichtung zur Zuteilung von Brenngas an eine Brennkraftmaschine gemäß der vorliegenden Erfindung in einer fliegenden Ansicht,
Fig. 2a das Ausführungsbeispiel des Magnetventils gemäß Figur 1 in einer zusammengebauten, quergeschnittenen Ansicht,
Fig. 2b ein weiteres Ausführungsbeispiel des Magnetventils in einer zusammengebauten, quergeschnittenen Ansicht,
Fig. 3a eine Ventilplatte mit einer erfindungsgemäßen Schutzbeschichtung in einer Draufsicht,
Fig. 3b die Ventilplatte gemäß Figur 3a in einer Seitenansicht in gegenüberstehender Anordnung zu einem Magnetkern,
Fig. 4a eine Draufsicht auf eine Ventilplatte mit einer Schutzbeschichtung gemäß einem weiteren Ausführungsbeispiel,
Fig. 4b eine Seitenansicht der Ventilplatte gemäß Figur 4a,
Fig. 5a eine Draufsicht auf eine Ventilplatte mit einer Schutzbeschichtung gemäß einem weiteren Ausführungsbeispiel,
Fig. 5b eine Draufsicht auf eine Ventilplatte mit einer Schutzbeschichtung gemäß dem weiteren Ausführungsbeispiel der Figur 5a, und
Fig. 6 eine Detailansicht einer weiteren Ausführungsform in senkrechter Schnittdarstellung, und
Fig. 7 und 8 Detailansichten einer alten und einer neuen Ausführungsform eines Ventilsitzes.

### BEVORZUGTE AUSFÜHRUNGSFORM DER ERFINDUNG

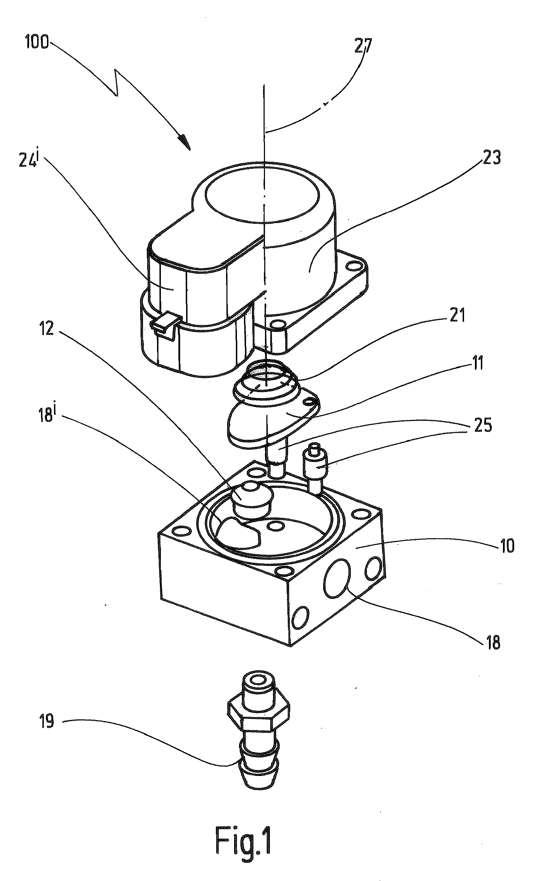

Figur 1 zeigt ein Ausführungsbeispiel eines Magnetventils 100 gemäß der vorliegenden Erfindung in einer fliegenden, perspektivischen Ansicht. Das Magnetventil 100 ist Bestandteil einer Vorrichtung zur Zuteilung von Brenngas an eine Brennkraftmaschine, wobei jedem Zylinder der Brennkraftmaschine ein Magnetventil 100 zugeordnet sein kann. Über das Magnetventil 100 wird die Zuteilung von Brenngas an den Zylinder der Brennkraftmaschine geregelt, indem das Magnetventil 100 den Brenngaszustrom an den Zylinder öffnen und schließen kann.

Das Magnetventil 100 ist im Wesentlichen zweiteilig aufgebaut und umfasst einen Ventilkörper 10 und einen Gehäuseoberteil 23 mit einem Elektroanschlussgehäuse 24', welches Gehäuseoberteil 23 in Gestalt eines Deckels aus Richtung einer Mittelachse 27 dichtend auf dem Ventilkörper 10 montierbar ist. Dabei entsteht ein gasdichter Innenraum, in den eine erste Einlassleitung 18 und eine weitere Einlassleitung 18' zum Einlass von Brenngas in den Innenraum hineinragen. Die mehrfache Anordnung von Einlassleitungen 18, 18' ermöglicht eine Reihenanordnung mehrerer Magnetventile 100 benachbart zueinander, und die Einlassleitungen 18 und 18' benachbarter Magnetventile 100 sitzen jeweils in der Reihenanordnung fluiddicht aneinander und bilden einen allen Magnetventilen 100 gemeinsamen Brenngas- Speisekanal.

Die Ventilanordnung selbst umfasst eine Ventilplatte 11, die über Gelenkschäfte 25 kippbar im Ventilkörper 10 aufgenommen ist. Ist das Gehäuseoberteil 23 vom Ventilkörper 10 abgenommen, so bilden die Gelenkschäfte 25 domartige Vorsprünge, auf denen die Ventilplatte 11 leicht montierbar ist. Mit einem weiteren Montageschritt ist eine Auslassleitung 19 im unteren Bereich des Ventilkörpers 10 montierbar und kann gasdicht mit einem Ventilsitz 12 verbunden bzw. zur Anlage gebracht werden, wobei der Ventilsitz 12 den Dichtpartner der Ventilplatte 11 bildet. Um die Position der dichtenden Anlage der Ventilplatte 11 auf dem Ventilsitz 12 zu sichern bzw. von der Öffnungsposition in die dichtende Position zu überführen, ist eine insbesondere progressiv wirkende Konusfeder 21 vorgesehen, die die Ventilplatte 11 gegen den Ventilsitz 12 drückt.

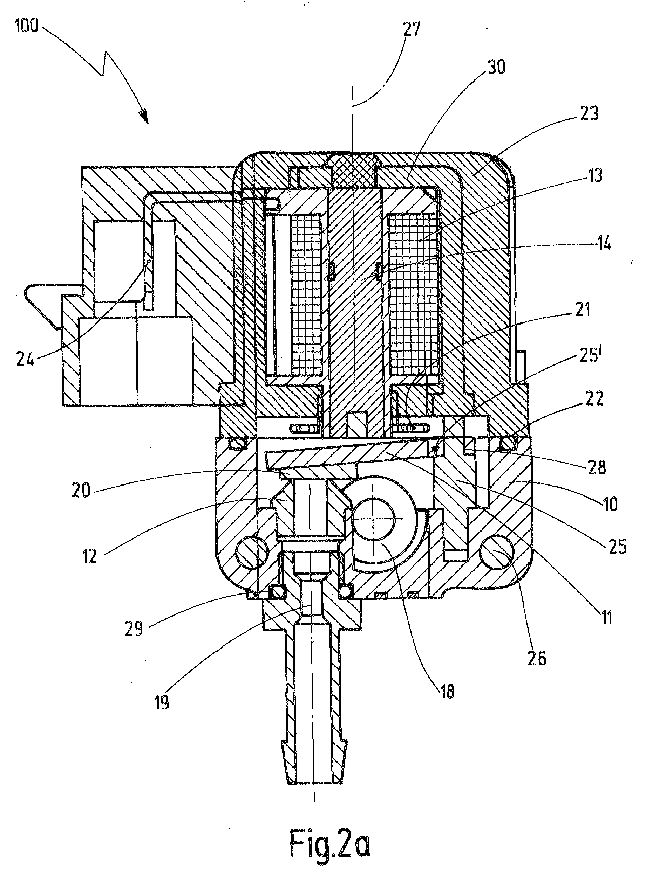

Figur 2a zeigt das Ausführungsbeispiel des Magnetventils 100 gemäß der vorliegenden Erfindung in einer zusammengebauten, quergeschnittenen Seitenansicht. In der Darstellung gezeigt ist die Einlassleitung 18 im hinteren Teil des Ventilkörpers 10, durch die das Brenngas in den Innenraum einströmt, der durch den Ventilkörper 10 gebildet ist. Weiterhin weist das Magnetventil 100 die sich nach unten erstreckende Auslassleitung 19 auf, über die das Brenngas das Magnetventil 100 verlassen und an den Zylinder der Brennkraftmaschine geleitet werden kann.

Die Auslassleitung 19 weist einen in den Innenraum im Ventilkörper 10 weisenden Ventilsitz 12 auf bzw. grenzt an den Ventilsitz 12 fluidisch verbunden an, der mit einem Verschlusselement 20 verschließbar ist. Das Verschlusselement 20 ist an einer kippbeweglich aufgenommenen Ventilplatte 11 angeordnet. Die kippbewegliche Aufnahme der Ventilplatte 11 im Ventilkörper 10 ist durch die Gelenkschäfte 25 gebildet, von denen einer gezeigt ist, sodass die Ventilplatte 11 um eine Kippachse kippen kann, die durch die Gelenkschäfte 25 gebildet ist, der mit einem oberen Teil durch einen Schaftdurchgang 28 in der Ventilplatte 11 hindurchstößt.

In der gezeigten Darstellung befindet sich das Verschlusselement 20 der Ventilplatte 11 auf dem Ventilsitz 12 der Auslassleitung 19. Folglich ist der Gasstrom von der Einlassleitung 18 zur Auslassleitung 19 unterbrochen. Soll der Gasdurchfluss zwischen der Einlassleitung 18 und der Auslassleitung 19 freigegeben werden, so muss das Verschlusselement 20 vom Ventilsitz 12 abgehoben werden. Hierzu dient eine Magnetspule 13, die sich um einen Magnetkern 14 und ein Joch 30 herum erstreckt und die im Gehäuseoberteil 23 aufgenommen ist. Die Magnetspule 13 kann beispielsweise einen Widerstand von 4 Ohm und eine Induktivität von 4,7 mH aufweisen, wobei die Magnetspule 13 über den Elektroanschluss 24 elektrisch bestrombar ist, so dass die Ventilplatte 11 in Richtung einer Mittelachse 27 des Magnetkerns 14 in Richtung zum Magnetkern 14 hin angezogen wird. Dabei kippt die Ventilplatte 11 um die durch die Gelenkschäfte 25 und die diesen zugeordneten Schaftdurchgänge 28 der Ventilplatte 11 gebildeten Kippachse. Folglich hebt sich das Verschlusselement 20 vom Ventilsitz 12 ab und der Gasdurchfluss zwischen der Einlassleitung 18 und der Auslassleitung 19 ist freigegeben. Wird die Bestromung der Magnetspule 13 beendet, bewirkt die Konusfeder 21, dass die Ventilplatte 11 wieder von der Endseite des Magnetkerns 14 gelöst wird, so dass das Verschlusselement 20 erneut gegen den Ventilsitz 12 gelangt.

Das Magnetventil 100 dient folglich als elektro-fluidischer Schalter zur Regelung der Zuteilung von Brenngas an eine Brennkraftmaschine, wobei eine Vielzahl von Magnetventilen 100 in einer Paketanordnung eine Zuteileinheit bilden kann und die Einlassleitungen 18 und 18' benachbarter Magnetventile 100 sitzen jeweils in einer Reihenanordnung fluiddicht aneinander und bilden einen allen Magnetventilen 100 gemeinsamen Brenngas- Speisekanal. Dabei kann der Ventilkörper 10 über Schraubelemente 26 an eine Aufnahme oder an das benachbarte Magnetventil befestigt werden.

Weiterhin sind zwischen dem Ventilkörper 10 und der Auslassleitung 19 ein erstes Dichtelement 29 und zwischen dem Ventilkörper 10 und dem Gehäuseoberteil 23 ein weiteres Dichtelement 22 gezeigt. Der Ventilkörper 10 kann einen metallischen Werkstoff aufweisen, wobei das Gehäuseoberteil 23 einen Kunststoffkörper bildet, in dem die Magnetspule 13 mit dem Magnetkern 14 und dem Joch 30 vergossen sein kann, sodass das Gehäuseoberteil ein einzeln handhabbares Bauteil nach Art eines Deckels ergibt, um Vorteile bei der Montage und/oder der Wartung des Magnetventils 100 zu erreichen.

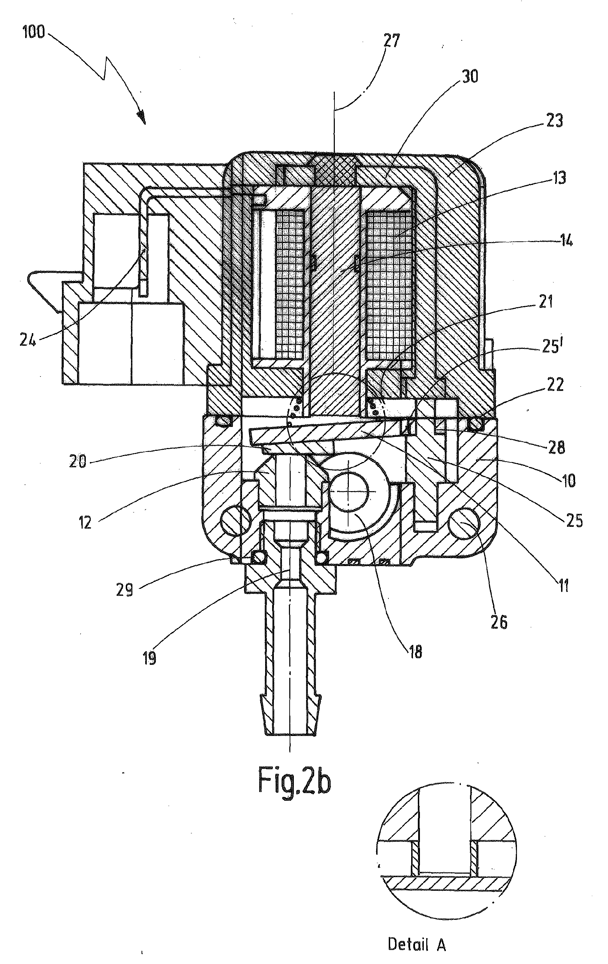

Die Figur 2b zeigt ein weiteres Ausführungsbeispiel, das im Wesentlichen mit dem Ausführungsbeispiel des Magnetventils 100 gemäß Fig. 2a übereinstimmt, so dass auf die vorangegangene Beschreibung Bezug genommen wird. Es ist bei dieser Ausführungsform allerdings vorgesehen, dass eine amagnetische Buchse 31 am Magnetkern 14 angeordnet ist, die ebenfalls als Verschleißschutz und zur Aufrechterhaltung eines Mindestabstandes zwischen der Ventilplatte und dem Magnetkern dient, wenn die Magnetspule bestromt ist. In Figur 2b ist außerdem noch zusätzlich die Konusfeder 21 eingezeichnet, die bei Figur 2a aus Gründen der Übersichtlichkeit nicht dargestellt wurde.

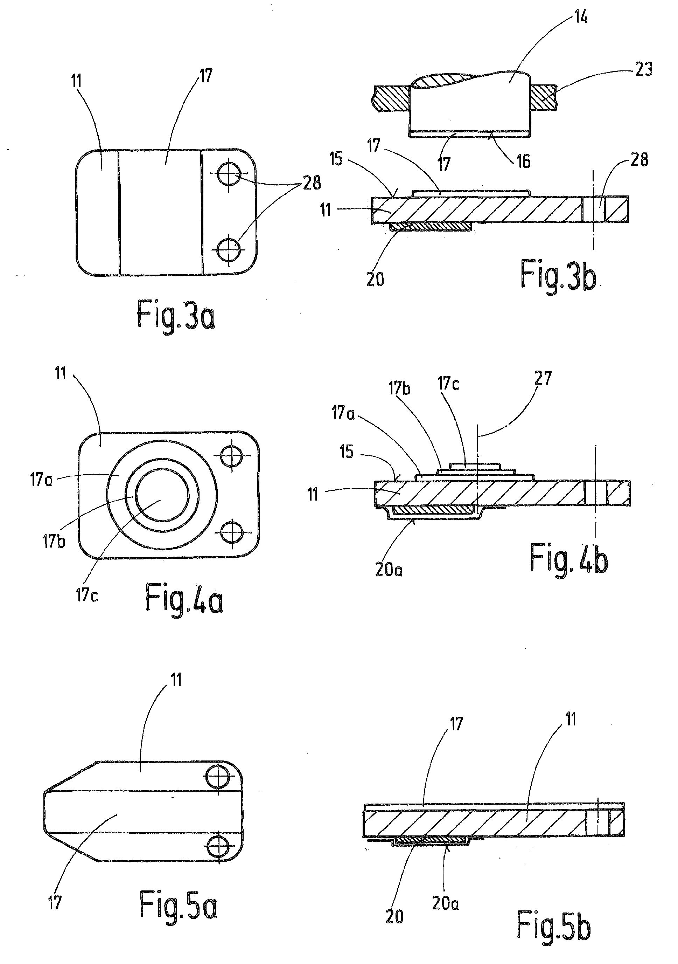

Die Figur 3a zeigt in einer Draufsicht eine mögliche Ausführung einer Ventilplatte 11, auf der erfindungsgemäß eine Schutzbeschichtung 17 aufgebracht ist, die als Verschleißschutzbeschichtung dient. Ferner dient die Schutzbeschichtung 17 zur Aufrechterhaltung eines Mindestabstandes zwischen dem Körper der Ventilplatte 11 und dem Ende des Magnetkerns 14, wenn die Magnetspule 13 bestromt wird und die Ventilplatte 11 gegen das Ende des Magnetkerns 14 angezogen wird. Die Schutzbeschichtung 17 ist beispielhaft auf einem beschichteten Streifen auf der Oberfläche der Ventilplatte 11 aufgebracht. Die Ventilplatte ist ferner mit Schaftdurchgängen 28 gezeigt, durch die sich jeweils ein Gelenkschaft 25 hindurch erstrecken kann, um ein Kippgelenk der Ventilplatte 11 zu bilden. Die rechteckförmige Ausführung der Ventilplatte 11 ist lediglich beispielhaft gewählt, so dass die Ventilplatte 11 auch eine dem Magnetkern 14 angepasste Kontur aufweisen kann.

Figur 3b zeigt die Ventilplatte 11 mit der Schutzbeschichtung 17 gemäß Figur 3a in einer Seitenansicht angrenzend an den Magnetkern 14, der im Gehäuseoberteil 23 aufgenommen ist. Die Schutzbeschichtung 17 ist mit einer gewissen Dicke beispielhaft sowohl auf der Ventilplattenprallfläche 15 als auch auf der Magnetkernprallfläche 16 des Magnetkerns 14 gezeigt. Unterseitig besitzt die Ventilplatte 11 ein Verschlusselement 20 mit einem Dichtungselement 20a, das gegen den Ventilsitz 12 gemäß der Darstellung in Figur 2 dichtend zur Anlage gelangen kann. Wird die Magnetspule 13 bestromt, und wird die Ventilplatte 11 gegen den Magnetkern 14 angezogen, so wird ein geometrischer Abstand zwischen der Ventilplattenprallfläche 15 und der Magnetkernprallfläche 16 aufrechterhalten. Der Abstand entspricht gemäß der vorliegenden Figur 3b der 2-fachen Dicke der Schutzbeschichtung 17. Ist nur auf einer der Prallflächen 15 oder 16 die Schutzbeschichtung 17 aufgebracht, so reduziert sich der Abstand auf die Dicke der einzelnen Schutzbeschichtung 17. Diese Dicke ist hinreichend groß bemessen, um Remanenzeffekten entgegenzuwirken, die einen Hafteffekt der Ventilplatte 11 am Magnetkern 14 bewirken können. Ferner ist ein Verschleißschutz sichergestellt, und es erfolgt keine plastische Deformation von beteiligten Komponenten auch bei einem längeren Gebrauch des Magnetventils 100.

Die Figuren 4a, 4b zeigen ein weiteres Ausführungsbeispiel zur Anwendung der Schutzbeschichtung 17 auf der Oberfläche der Ventilplatte 11. Hierin weist die Schutzbeschichtung 17 mit zunehmendem Abstand von der Mittelachse 27 eine verschieden bemessene Dicke auf. Die Darstellung zeigt drei Schutzbeschichtungen 17a, 17b und 17c, die aufeinander folgend auf der Ventilplattenprallfläche 15 aufgebracht sind. Der Durchmesser der Schutzbeschichtung 17c entspricht etwa dem Durchmesser des Magnetkerns 14, wobei der Durchmesser der Schutzbeschichtung 17b größer als der Durchmesser der Schutzbeschichtung 17c ist und wobei der Durchmesser der Schutzbeschichtung 17a größer ist als der Durchmesser der Schutzbeschichtung 17b. Folglich entsteht über der flächigen Erstreckung der Ventilplattenprallfläche eine unterschiedlich dick ausgebildete Schichtdicke, wobei die Mittelachse 27 das Zentrum der Kontaktfläche der Ventilplatte 11 zur Magnetkernprallfläche 16 bildet.

Bei der Ausführungsform gemäß Fig. 5a und 5b ist die Schutzbeschichtung 17 in Form eines breiten Längsstreifens über der gesamten Länge der Ventilplatte 11 ausgebildet, und die Ventilplatte 11 ist länglich ausgeführt. In der Seitenansicht in Figur 5b ist das Verschlusselement 20 an der Unterseite der Ventilplatte 11 gezeigt, das mit einer Elastomerbeschichtung 20a überzogen ist.

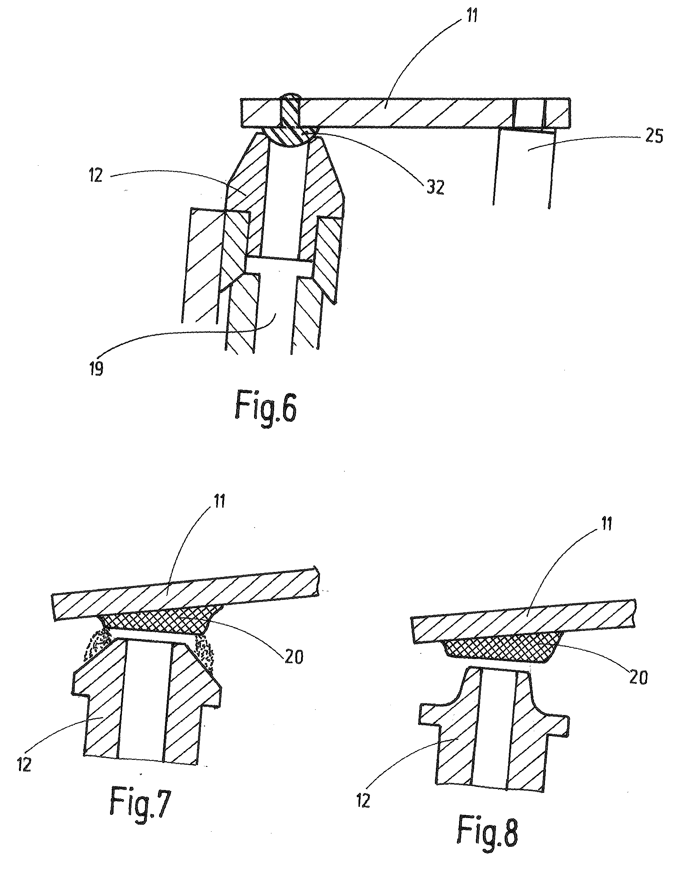

Bei der Ausführungsform gemäß Fig. 6 ist statt der Elastomerdichtung eine Kugeldichtung aus jeglichen geeigneten Materialien, die kältebeständig bis -100°C sind, vorgesehen, so dass die Dichtung gegen durchströmendes Erdgas auch bei -80°C beständig bleibt. Die Kugeldichtung ist in Form einer Kugelkalotte ausgebildet.

In den Fig. 7 und 8 sind zwei Ausführungsformen eines Ventilsitzes 12 gegenübergestellt. Der Ventilsitz 12 gemäß Fig. 7 entspricht dabei einer älteren Ausführungsform, während Fig. 8 die neue erfinderische Ausführungsform zeigt. Da die Treibgase für Ottomotoren mehr oder weniger mit Parafinen und Schwerölrückständen verunreinigt sind, besteht die Gefahr von Aufbau der Verunreinigungen auf der Ventildüse, die eine Verklebungsgefahr der Ventilklappe mit sich bringen mit diese Gefahr zu minimieren, sollte die Ventildüse so schlank wie möglich ausgebildet sein, siehe Figur 8.

Die vorliegende Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten, räumliche Anordnungen und Verfahrensschritte, können sowohl für sich als auch in den verschiedensten Kombinationen erfindungswesentlich sein. Insbesondere kann die in den Figuren gezeigte Schutzbeschichtung 17 eine Molybdänbeschichtung sein, wobei jedes weitere Beschichtungsmaterial der Schutzbeschichtung 17 zur Erzielung der erforderlichen Effekte Verwendung finden kann. Die Schutzbeschichtung 17 muss dabei sowohl einen Verschleißschutz bieten als auch den Mindestabstand zwischen der Ventilplatte 11 und dem Magnetkern 14 bei bestromter Magnetspule 13 einhalten. Als besonders geeignet kann eine Molybdänbeschichtung angesehen werden, wobei auch Keramikbeschichtungen, Kunststoffhartbeschichtungen oder sonstige Beschichtungen Verwendung finden können.

### BEZUGSZEICHENLISTE

- 100: Magnetventil
- 10: Ventilkörper
- 11: Ventilplatte
- 12: Ventilsitz
- 13: Magnetspule
- 14: Magnetkern
- 15: Ventilplattenprallfläche
- 16: Magnetkernprallfläche
- 17: Schutzbeschichtung, Verschleißschutzbeschichtung
- 17a: Schutzbeschichtung
- 17b: Schutzbeschichtung
- 17c: Schutzbeschichtung
- 18: Einlassleitung
- 18': Einlassleitung
- 19: Auslassleitung
- 20: Verschlusselement
- 20a: Elastomerbeschichtung
- 21: Konusfeder
- 22: Dichtelement
- 23: Gehäuseoberteil
- 24: Elektroanschluss
- 24': Elektroanschlussgehäuse
- 25: Gelenkschaft
- 25': Bestimmungsfläche
- 26: Schraubelement
- 27: Mittelachse
- 28: Schaftdurchgang
- 29: Dichtelement
- 30: Joch
- 31: Amagnetische Buchse
- 32: Kugelkalotte
- 33: Verunreinigungen

## Patentansprüche

1. Magnetventil (100) einer Vorrichtung zur Zuteilung von Brenngas an eine Brennkraftmaschine, aufweisend einen Ventilkörper (10), eine Ventilplatte (11), die kippbar im Ventilkörper (10) aufgenommen ist, einen Ventilsitz (12), gegen den die Ventilplatte (11) dichtend zur Anlage bringbar ist, eine Magnetspule (13) mit einem Magnetkern (14) und einem Joch (30), wobei durch elektrisches Bestromen der Magnetspule (13) die Ventilplatte (11) mit einer Ventilplattenprallfläche (15) gegen eine Magnetkernprallfläche (16) des Magnetkerns (14) kippbar ist, sodass durch Kippen der Ventilplatte (11) entgegen den Magnetkern (14) die dichtende Anlage der Ventilplatte (11) vom Ventilsitz (12) lösbar ist, **dadurch gekennzeichnet, dass** wenigstens eine der Prallflächen (15, 16) eine Schutzbeschichtung (17) aufweist.

2. Magnetventil nach Anspruch 1, **dadurch gekennzeichnet, dass** die Schutzbeschichtung (17) als Verschleißschutzbeschichtung (17) mit nicht-ferromagnetischen Eigenschaften ausgebildet ist, wobei vorzugsweise die Schutzbeschichtung (17) eine Metallbeschichtung oder eine Molybdänbeschichtung und/oder eine Keramikbeschichtung ist.

3. Magnetventil nach einem der Ansprüche 1 oder 2, **dadurch gekennzeichnet, dass** die Schutzbeschichtung (17) mit einem Materialauftragverfahren, insbesondere mit einem Spritzverfahren und bevorzugt mit einem Flammspritzverfahren aufgebracht ist und/oder dass die Schutzbeschichtung (17) eine Schichthärte von wenigstens ca. 500 HV10, bevorzugt von wenigstens ca. 800 HV10 und besonders bevorzugt von wenigstens ca. 1000 HV10 aufweist.

4. Magnetventil nach einem der vorgenannten Ansprüche, **dadurch gekennzeichnet, dass** die Schutzbeschichtung (17) eine Schichtdicke aufweist, die wenigstens derart bestimmt ist, dass ein Lösen der Ventilplatte (11) insbesondere bei magnetischer Remanenz des Magnetkerns (14) ermöglicht ist.

5. Magnetventil nach einem der vorgenannten Ansprüche, **dadurch gekennzeichnet, dass** die Ventilplattenprallfläche (15) durch eine Planfläche der Ventilplatte (11) gebildet ist und sich die Schutzbeschichtung (17) über der gesamten Planfläche erstreckt oder dass sich die Schutzbeschichtung (17) über den Teil der Planfläche erstreckt, der wenigstens die Kontaktfläche der Ventilplatte (11) zur Magnetkernprallfläche (16) bildet.

6. Magnetventil nach einem der vorgenannten Ansprüche, **dadurch gekennzeichnet, dass** die Schichtdicke der Schutzbeschichtung (17) über der flächigen Erstreckung der Ventilplattenprallfläche (15) unterschiedlich ausgebildet ist, insbesondere dass die Schichtdicke über der Kontaktfläche und bevorzugt im Zentrum der Kontaktfläche der Ventilplatte (11) zur Magnetkernprallfläche (16) ein Maximum aufweist.

7. Magnetventil nach einem der vorangegangenen Ansprüche, **dadurch gekennzeichnet, dass** ein Verschlusselement (20) zur Auflagerung auf den Ventilsitz (12) aus einem Elastomer besteht oder eine Elastomerbeschichtung (20a) aufweist, und/oder als Kugelkalotte (32) ausgebildet ist.

8. Magnetventil nach einem der vorangegangenen Ansprüche, **dadurch gekennzeichnet, dass** die kippbare Aufnahme der Ventilplatte (11) im Ventilkörper (10) mittels einem oder mehreren Gelenkschäften (25) und vorzugsweise mittels zwei Gelenkschäften (25) vorgesehen ist, an dem bzw. an denen die Ventilplatte (11) aufgehängt ist.

9. Magnetventil nach Anspruch 8, **dadurch gekennzeichnet, dass** die Ventilplatte (11) eine der Anzahl der Gelenkschäfte (25) zugeordnete Anzahl von Schaftdurchgängen (28) aufweist, durch die sich die Gelenkschäfte (25) teilweise hindurch erstrecken, sodass zwischen den Gelenkschäften (25) und den Schaftdurchgängen (28) eine Gelenkanordnung gebildet ist, und wobei die Gelenkschäfte (25) vorzugsweise aus einem nicht magnetischen Stahl ausgebildet sind.

10. Magnetventil nach einem der Ansprüche 8 oder 9, **dadurch gekennzeichnet, dass** der wenigstens eine Gelenkschaft (25) eine abgeschrägte Bestimmungsfläche (25') aufweist, durch die eine Kippfreiheit der Ventilplatte (11) zwischen einer am Ventilsitz (12) und einer am Magnetkern (14) angrenzenden Position bestimmt ist.

11. Magnetventil nach einem der vorangegangenen Ansprüche, **dadurch gekennzeichnet, dass** der Ventilkörper (10) vorzugsweise mit vormontierter Ventilplatte (11) und das Gehäuseoberteil (23) vorzugsweise mit integrierter Magnetspule (13), mit integriertem Magnetkern (14) und insbesondere mit einem angeformten Elektroanschlussgehäuse (24') eine jeweilige bauliche Einheit bilden, sodass das Gehäuseoberteil (23) fluiddicht auf dem Ventilkörper (10) montierbar sind.

12. Magnetventil nach einem der vorangegangenen Ansprüche, **dadurch gekennzeichnet, dass** der Ventilkörper (10) mehrere Einlassleitungen (18, 18') aufweist, wobei die Magnetventile mehrfach zueinander benachbart anordbar sind und durch die Einlassleitungen (18, 18') ein gemeinsamer sich durch die mehreren Magnetventile hindurch erstreckender Brenngas- Speisekanal bildbar ist.

13. Vorrichtung zur Zuteilung von Brenngas an eine Brennkraftmaschine mit wenigstens einem Magnetventil (100), wobei das Magnetventil aufweist: einen Ventilkörper (10), eine Ventilplatte (11), die kippbar im Ventilkörper (10) aufgenommen ist, einen Ventilsitz (12), gegen den die Ventilplatte (11) dichtend zur Anlage bringbar ist, eine Magnetspule (13) mit einem Magnetkern (14) und einem Joch (30), wobei durch elektrisches Bestromen der Magnetspule (13) die Ventilplatte (11) mit einer Ventilplattenprallfläche (15) gegen eine Magnetkernprallfläche (16) kippbar ist, sodass durch Kippen der Ventilplatte (11) entgegen den Magnetkern (14) die dichtende Anlage der Ventilplatte (11) vom Ventilsitz (12) lösbar ist, **dadurch gekennzeichnet, dass** wenigstens eine der Prallflächen (15, 16) eine Schutzbeschichtung (17) aufweist oder der erforderliche Luftspalt im Magnetfeld durch eine Buchse aus einem harten amagnetischem Metall beispielsweise aus CuNi-Stahl oder Titan, die auf den vorstehenden Magnetkern der Spule aufgepresst oder geklebt wird, gebildet wird.
